# EUROPÄISCHE PATENTSCHRIFT

(11) **EP 1 500 236 B1**
(45) Veröffentlichungstag und Bekanntmachung des Hinweises auf die Patenterteilung: **07.05.2008**
(21) Anmeldenummer: 03722298.1
(22) Anmeldetag: 24.04.2003
(51) Int. Cl.: H04L 12/56, H04L 12/24, H04L 12/26

(54) **VERFAHREN ZUR ÜBERWACHUNG DER ÜBERTRAGUNGSGÜTE VON VERBINDUNGEN IN MPLS-NETZEN**
METHOD FOR MONITORING THE TRANSMISSION QUALITY OF CONNECTIONS IN MPLS NETWORKS
PROCEDE POUR SURVEILLER LA QUALITE DE TRANSMISSION DE LIAISONS DANS DES RESEAUX MPLS

(30) Priorität: 29.04.2002 DE 10219152
(43) Veröffentlichungstag der Anmeldung: 26.01.2005
(73) Patentinhaber: Nokia Siemens Networks GmbH & Co. KG, 81541 München (DE)
(72) Erfinder: KLINK, Joachim, München 81377 (DE)
(86) Internationale Anmeldenummer: PCT/DE2003/001336
(87) Internationale Veröffentlichungsnummer: WO 2003/094442

(56) Entgegenhaltungen:
- WO-A-01/82022
- US-B1- 6 363 056
- HARRISON N ET AL: "OAM Functionality for MPLS Networks" INTERNET DRAFT, Februar 2001 (2001-02), XP002202811 Gefunden im Internet: <URL:http://www.watersprings.org/pub/id/dr aft-harrison-mpls-oam-00.txt> [gefunden am 2002-06-19]
- STEVENS ET AL: "TCP/IP ILLUSTRATED, Vol. 1. THE PROTOCOLS" TCP/IP ILLUSTRATED. VOL. 1: THE PROTOCOLS, PROFESSIONAL COMPUTING SERIES, READING, MA: ADDISON WESLEY, US, Bd. 1, 1994, Seiten 97-110, XP002144685 ISBN: 0-201-63346-9
- SHEU T L ET AL: "Multiple-path ATM switch architecture for dynamic VC establishment" IEE PROCEEDINGS E. COMPUTERS & DIGITAL TECHNIQUES, INSTITUTION OF ELECTRICAL ENGINEERS. STEVENAGE, GB, Bd. 148, Nr. 3, 23. Mai 2001 (2001-05-23), Seiten 119-127, XP006016641 ISSN: 1350-2387

## Beschreibung

Die Erfindung betrifft ein Verfahren gemäß dem Oberbegriff von Patentanspruch 1.

Beim Stand der Technik ist die OAM Funktionalität (Operation and Maintenance) als wesentlicher Bestandteil der Betriebsweise öffentlicher Kommunikationsnetze anzusehen. Sie unterstützt die Qualität der Netzperformance bei gleichzeitiger Reduktion der Betriebskosten des Netzes. Besonders im Hinblick auf die Dienstgüte der übertragenen Informationen (Quality of Service, QoS) leistet sie einen wesentlichen Beitrag. Strategien bezüglich OAM-Funktionalitäten wurden bereits für SONET/SDH sowie für ATM-Netze vorgeschlagen.

Durch die OAM Funktionalität kann der Betreiber eines Kommunikationsnetzes jederzeit Kenntnis darüber erlangen, ob die für eine Verbindung garantierte Dienstgüte (Service Level Agreement) auch eingehalten wird. Hierzu muss der Betreiber die Verfügbarkeit bestehender Verbindungen (Verbindung "up" oder "down") ebenso kennen, wie die zeitliche Verzögerung bei der Übermittlung der Informationen (Delay, Delay variation), die - ggf. gemittelte - Abweichung vom ansonsten üblichen Abstand zwischen je zwei Informationsübermittlungen (Delay Jitter), oder die Anzahl der erst gar nicht zur Übermittlung zugelassenen Informationen (Blocking Rate, error performance).

Fällt beispielsweise eine Verbindung aus, muss unmittelbar der Fehler ermittelt (Fault detection), lokalisiert (Fault lokalisation), sowie gegebenenfalls die Verbindung auf eine Ersatzstrecke (Protection switching) umgeleitet werden können. Damit kann der Verkehrsfluß im Netz (Traffic flow) sowie die Vergebührung (Billing procedures) verbessert werden.

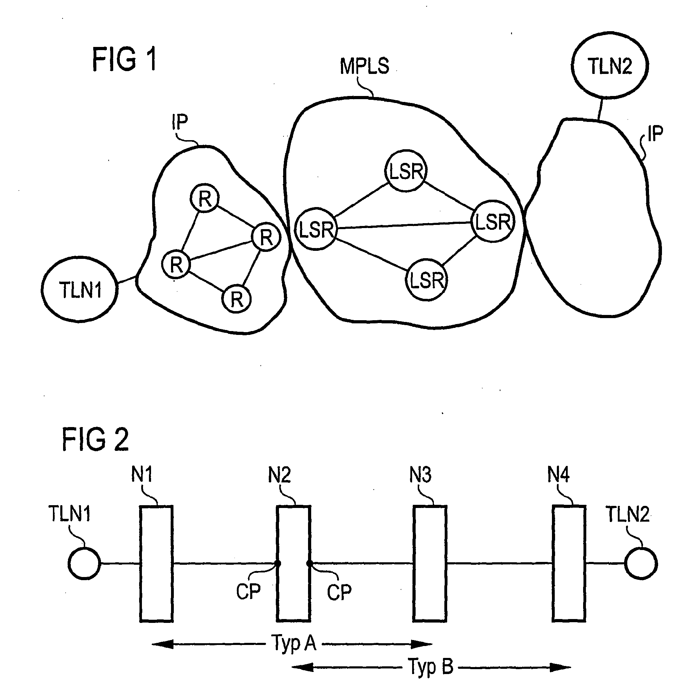

Für Übertragungen von Informationen im Internet werden gegenwärtig MPLS-Netze vorgeschlagen. In MPLS-Netzen (Multiprotocol Packet Label Switching) werden Informationen mittels MPLS-Paketen übertragen. MPLS-Pakete weisen eine variable Länge mit jeweils einem Kopfteil sowie einem Informationsteil auf. Der Kopfteil dient der Aufnahme von Verbindungsinformation während der Informationsteil der Aufnahme von Nutzinformation dienlich ist. Als Nutzinformation werden IP-Pakete verwendet. Die im Kopfteil enthaltene Verbindungsinformation ist als MPLS-Verbindungsnummer ausgebildet. Diese hat aber lediglich im MPLS-Netz Gültigkeit. Wenn somit ein IP-Paket von einem Internet-Netz in das MPLS-Netz eindringt (Fig. 1), wird diesem der im MPLS-Netz gültige Kopfteil vorangestellt. Darin sind alle Verbindungsinformationen enthalten, die den Weg des MPLS-Paketes im MPLS-Netz vorgeben. Verläßt das MPLS-Paket das MPLS-Netz, wird der Kopfteil wieder entfernt und das IP-Paket im sich daran anschließenden Internet-Netz nach Maßgabe des IP-Protokolls weitergeroutet. MPLS-Pakete werden unidirektional übertragen.

In Fig. 1 wird beispielhaft davon ausgegangen, daß Informationen z. B. ausgehend von einem Teilnehmer TLN1 einem Teilnehmer TLN2 zugeführt werden. Der sendende Teilnehmer TLN1 ist dabei an das Internet-Netz IP angeschlossen, durch das die Informationen nach einem Internetprotokoll wie z.B. das IP-Protokoll geleitet werden. Dieses Protokoll ist kein verbindungsorientiertes Protokoll. Das Internet-Netz IP weist eine Mehrzahl von Routern R auf, die untereinander vermascht sein können. Der empfangende Teilnehmer TLN2 ist an ein weiteres Internet-Netz IP angeschlossen. Zwischen den beiden Internet-Netzen IP ist ein MPLS-Netz eingefügt, durch das Informationen in Form von MPLS-Paketen verbindungsorientiert durchgeschaltet werden.Dieses Netz weist ebenfalls eine Mehrzahl von miteinander vermaschten Routern auf. In einem MPLS-Netz können dies sogenannte Label Switched Router (LSR) sein.

In MPLS-Netzen kommt der Garantie der Dienstgüte (Quality of Service, QoS) eine tragende Bedeutung zu. Hierbei spielt für den Netzbetreiber die Kentniss über die während des Übertragungsvorganges verlorenengegangenen oder fehlerhaft eingefügten Pakete eine wichtige Rolle (Übertragungsgüte, Performance Monitoring), da er nach Maßgabe dieser Informationen für den Anwender entsprechende Verbindungen bereitstellen kann. Allerdings liefert der Stand der Technik zur Lösung dieser Problematik keinen Beitrag.

N. Harrison et al., "OAM Functionality for MPLS Networks", Feb-2001, XP-002202811, ist ein Internet-Entwurf zu RFC2026, Abschnitt 10 und betrifft Erfordernisse sowie Mechanismen zur OAM der Anwendungsebene in MPLS-Netzwerken. Hierzu wird ein Verbindungsverifikationspaket "CV" definiert, das periodisch von einer LSP-Quelle zu einer LSP-Senke übermittelt wird. Der CV-Datenverkehr kann zur Erkennung von Fehlern, die auf falschem Routing basieren, sowie zur Erkennung von Fehlern in Netzwerkknoten eingesetzt werden.

In Abschnitt 6.3.4 wird in Tabelle 2 das erste Oktett der OAM-Paketdaten zur Festlegung eines OAM-Funktionstyps definiert. Der Funktionstyp "CV" (Verbindungsverifikation) wird auf Seite 13 eingesetzt zur Erkennung/Diagnose von LSP-Verbindungsfehlern.

US 6,363,056 betrifft eine Fehlerüberwachung derart, dass eine Anzahl empfangener Testpakete mit einer Zahl der tatsächlich empfangenen Pakete verglichen wird. Auch ermöglicht US 6,363,056 eine Bestimmung einer Übertragungsverzögerung, indem ein in einem Testpaket übermittelter Zeitstempel subtrahiert wird von einer Zeit, zu der ein Testpaket empfangen wurde.

Der Erfindung liegt die Aufgabe zugrunde einen Weg aufzuzeigen, wie Informationen über die während des Übertragungsvorganges verlorenengegangenen oder fehlerhaft eingefügten Pakete in MPLS-Netzen mit geringem Aufwand bereitgestellt werden können.

Die Erfindung wird ausgehend von den in Oberbegriff von Patentanspruch 1 angegebenen Merkmalen durch die kennzeichnenden Merkmale gelöst.

Vorteilhaft an der Erfindung ist insbesondere das Vorsehen von speziell ausgebildeten MPLS-OAM-Paketen, die in den Verkehrsstrom von Nutzdatenpaketen eingefügt werden. Hierzu ist neben der Markierung oder Kennung im Paketkopf als MPLS-OAM-Paket (um die MPLS-OAM-Pakete von den nutzdatentragenden MPLS-Paketen zu unterscheiden) eine weitere Kennung erforderlich. Die derart definierten Pakete (im folgenden mit MPLS-OAM-LAV-Pakete bezeichnet) werden zur Überwachung der Übertragungsgüte (Performance Monitoring) einer MPLS-Verbindung (MPLS Label Switched Path) eingesetzt, indem im Informationsteil der MPLS-OAM-LAV-Pakete ein Feld zur Aufnahme der Anzahl der pro Zeitintervall gesendeten MPLS-Pakete vorgesehen ist. Empfangsseitig (Senke) wird dieser mitübertragene Zählwert ausgelesen und mit der Anzahl der tatsächlich empfangenen Pakete für diese Verbindung innerhalb des vorgegebenen Zeitintervalls verglichen, wobei das Ergebnis als Kriterium für verlorengegangene und/ oder fehlerhaft hinzugefügte Pakete fungiert.

Vorteilhafte Weiterbildungen der Erfindung sind in den Unteransprüchen angegeben.

Die Erfindung wird im folgenden anhand eines Ausführungsbeispiels näher erläutert.

Es zeigen:
- Figur 1: die grundsätzlichen Verhältnisse in einem MPLS-Netz
- Figur 2: eine End-to-End-Verbindung zwischen zwei Teilnehmer
- Figur 3: die Verhältnisse im Paketkopf und im Informationsteil eines MPLS-OAM-Paketes

In Fig. 2 ist eine Verbindung (Lable Switched Path, LSP) zwischen zwei Teilnmehmern TLN1, TLN2 aufgezeigt. Diese Verbindung wird über eine Mehrzahl von Knoten N1...N4 geführt, wodurch eine Mehrzahl von Verbindungsabschnitten (Lable Switched Hop) definiert werden. Die Knoten N1...N4 sollen als Router LSR eines MPLS-Netzes ausgebildet sein. Zwischen dem Teilnehmer TLN1 und dem Teilnehmer TLN2 entsteht nun nach einem erfolgreichen Verbindungsaufbau ein Informationsfluss, der aus einer Mehrzahl von die nutzdatentragenden MPLS-Paketen gebildet wird. In diesen MPLS-Paketfluss können MPLS-OAM-Pakete eingefügt werden (Inband LSP). Im Gegensatz hierzu werden Verbindungen definiert, über die ausschließlich MPLS-OAM-Pakete geführt werden (Outband LSP). Grundsätzlich sind inband MPLS-OAM-Pakete nützlich, um Verbindungen LSP auf individueller Basis mitzuprotokollieren. In einigen Fällen jedoch kann es vorteilhafter sein, einen Out-of-Band MPLS-OAM-Paketfluss zu definieren. Ein Beispiel hierfür ist die MPLS-Gruppenersatzschaltung.

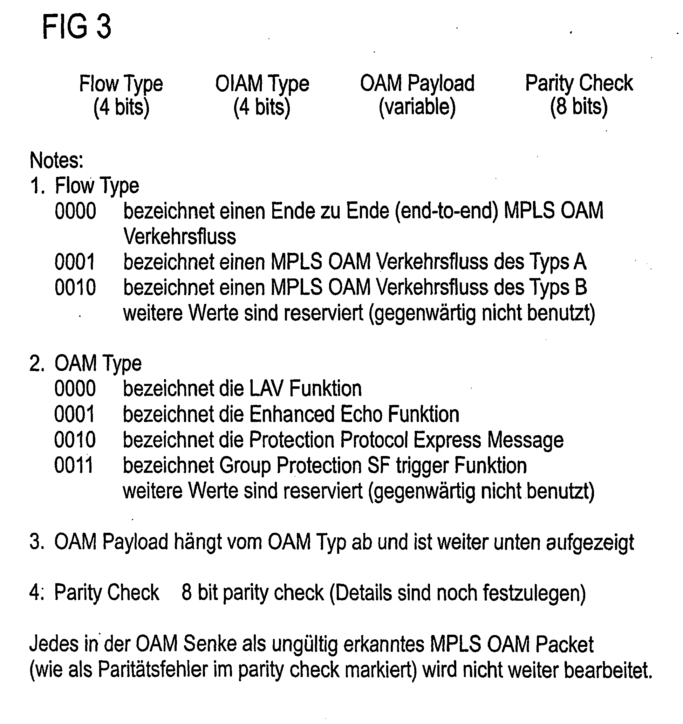

Um MPLS-OAM-Pakete von nutzdatentragenden MPLS-Paketen unterscheiden zu können, werden die MPLS-OAM-Pakete markiert. Die speziellen Markierungsmechanismen sind in Fig. 3 aufgezeigt und werden später noch im einzelnen näher beschrieben. Die Aufeinanderfolge mehrerer MPLS-OAM-Pakete definiert einen MPLS-OAM-Paketfluss. Grundsätzlich können 3 verschiedene Arten eines MPLS-OAM-Paketflusses gleichzeitig für eine Verbindung LSP existieren:

End-to-end MPLS-OAM-Paketfluss. Er wird insbesondere dann verwendet, wenn eine OAM Kommunikation zwischen einer Quelle und einer Senke einer Verbindung LSP erfolgt. Er wird aus MPLS-OAM-Paketen gebildet, die in der Quelle der Verbindung LSP in den Nutzdatenstrom eingefügt und an der Senke diesem wieder entnommen werden. Die MPLS-OAM-Pakete können entlang der Verbindung LSP an den Connection Point CP aufgezeichnet und überwacht werden, ohne dass in den Übertragungsprozeß eingegriffen wird (passive Überwachung).

Von dem End-to-end definierten MPLS-OAM-Paketfluss wird der MPLS-OAM-Paketfluss des Typs A unterschieden. Er wird insbesondere dann verwendet, wenn eine OAM Kommunikation zwischen den Knoten, die einen Verbindungsabschnitt (Segment) des Typs A begrenzen, erfolgt (Fig. 2). Ein oder mehrere MPLS-OAM-Segmente des Typs A können in der Verbindung LSP definiert werden, sie können aber weder verschachtelt werden noch können sie sich mit anderen Segmenten des Typs A überlappen.

Von den beiden vorstehend genannten Arten des Paketflusses wird schließlich der MPLS-OAM-Paketfluss des Typs B unterschieden. Er wird insbesondere dann verwendet, wenn eine OAM Kommunikation zwischen den Knoten, die einen Verbindungsabschnitt des Typs B begrenzen, erfolgt (Fig. 2). Ein oder mehrere MPLS-OAM-Segmente des Typs B können in der Verbindung LSP definiert werden, sie können aber weder verschachtelt werden noch können sie sich mit anderen Segmenten des Typs B überlappen.

Grundsätzlich wird ein MPLS-OAM-Paketfluss (end-to-end, Typ A, Typ B) aus MPLS-OAM-Paketen gebildet, die am Anfang eines Segmentes in den Nutzdatenstrom eingefügt und am Ende des Segmentes diesem wieder entnommen werden. Sie können entlang der Verbindung LSP an den Connection Points CP aufgezeichnet und bearbeitet werden, ohne dass in den Übertragungsprozeß eingegriffen wird. Jeder Connection point CP in der Verbindung LSP einschließlich der Quellen und Senken der Verbindung können als MPLS-OAM-Quelle oder MPLS-OAM-Senke konfiguriert werden, wobei die von einer MPLS-OAM-Quelle ausgehenden MPLS-OAM-Pakete vorzugsweise als "upstream" zu konfigurieren sind.

Bevor MPLS-OAM-Pakete (end-to-end, Typ A, Typ B) über das MPLS-Netz übertragen werden, müssen die Endpunkte (Quelle, Senke) des zugehörigen MPLS-OAM-Segmentes definiert sein. Die Definition von Quelle und Senke für ein MPLS-OAM-Segment ist nicht notwendigerweise für die Dauer der Verbindung fest vorgegeben. Dies bedeutet, dass das betreffende Segment beispielsweise über Felder im Signalisierungsprotokoll rekonfiguriert werden kann.

Für jede Verbindung LSP ist eine Verschachtelung des segmentierten MPLS-OAM-Paketflusses (Typ A oder Typ B) innerhalb eines End-to-end MPLS-OAM-Paketflusses möglich. Die Connection points CP können dabei gleichzeitig Quelle/Senke eines Segmentflusses (Typ A oder Typ B) wie auch des End-to-end-MPLS-OAM-Paketflusses sein.

Der MPLS-OAM-Paketfluss (Segmentfluss) des Typs A ist funktionell unabhängig von dem des Typs B im Hinblick auf Einfügen, Herausnehmen sowie Verarbeiten der MPLS-OAM-Pakete. Im allgemeinen ist daher das Verschachteln von MPLS-OAM-Paketen des Typs B mit denen des Typs A und umgekehrt möglich. Im Falle der Verschachtelung kann daher ein Conection point CP gleichzeitig Quelle und Senke auch eines OAM-Segmentflusses von Typ A und von Typ B sein.

Das Überlappen der Segmente des Typs A mit denen des Typs B ist in Abhängigkeit von der Netzarchitektur möglich. Beispielsweise können im Falle einer Punkt-zu-Punkt-Architektur Segmente des Typs A mit denen des Typs B überlapppen. Beide Segmente können unabhängig voneinander operieren und werden sich daher in keiner Weise beeinflussen. In MPLS-Ersatzschaltungen allerdings kann das Überlappen zu Problemen führen.

Die Unterscheidung der MPLS-OAM-Paketen von nutzdatentragenden MPLS-Paketen kann durch Verwendung eines der EXP-Bits im MPLS-Paketkopf durchgeführt werden. Insbesondere ist mit dieser Vorgehensweise eine sehr einfache Unterscheidungsmöglichkeit gegeben. In der Senke eines MPLS-OAM-Segmentes oder an den Connection points CP kann dieses Bit überprüft werden, um MPLS-OAM-Pakete herauszufiltern, bevor weitere Auswertungen vorgenommen werden.

Alternativ kann eine der MPLS-Verbindungsnummern (MPLS label values) Nr. 4 bis Nr. 15 im Kopfteil des MPLS-Pakets als Kennung verwendet werden. Diese MPLS-Verbindungsnummern wurden von der IANA reserviert. In diesem Fall muss die nächste Kennung im Stack der zugeordneten Verbindung LSP andeuten, wofür die Inband OAM-Funktionalität ausgeführt wird. Dieser Lösungsansatz ist etwas komplexer zu implementieren, da die Hardware in der OAM-Senke und den Connection points CP zwei MPLS-Stack-Eingänge für jedes MPLS-OAM-Paket benötigt. Selbstverständlich muss das Bearbeiten in Realtime erfolgen, d.h. in den Connection points CP müssen die OAM-Pakete wieder in den Fluss bei Einhalten der Sequenzreihenfolge eingefügt werden. Dies ist zwingend notwendig, um korrekte Performance-Monitoring Ergebnisse in der OAM-Senke sicherzustellen.

Zur Überwachung (Verifikation) der Verfügbarkeit (Availability) einer MPLS-Verbindung LSP (im folgenden mit MPLS-LAV-Funktion bezeichnet) werden MPLS-OAM-LAV-Pakete definiert. Sie werden in den Fluß der Nutzinformationen eingefügt (Inband Flow) und sind einer bestimmten Verbindung LSP zugeordnet. Damit kann die Verfügbarkeit einer Verbindung LSP auf end-to-end Basis oder segmentierter Basis ermittelt werden. Hierzu wird periodisch pro Zeitintervall (z.B. pro Sekunde) an der Quelle ein dafür vorgesehenes MPLS-OAM-LAV-Paket eingefügt und periodisch pro Zeitintervall (z. B. pro Sekunde) an der Senke auf sein Eintreffen hin überwacht. Falls nach einer vordefinierten Zeit (von z. B. mehreren Sekunden) und gegebenenfalls mehrfacher Überprüfung (z.B. 2 bis 3 mal) kein MPLS-OAM-LAV-Paket an der Senke empfangen worden ist, wird die Verbindung LSP als nicht verfügbar erklärt (LSP ="down" oder "unavailable"). Im Falle der nicht verfügbaren Verbindung LSP wird weiterhin periodisch an der Senke die Ankunft des MPLS-OAM-LAV-Paket überprüft, und falls nach einer vordefinierten Zeit (von mehreren Sekunden) dieses wieder an der Senke empfangen wird, wird die Verbindung wieder als verfügbar erklärt.

Die MPLS-LAV-Funktion kann gleichzeitig auf end-to-end Basis oder segmentierter Basis für jede Verbindung LSP an einem beliebigen Interface CP oder Netzelement aktiviert werden. Aktivierung und Deaktivierung ist über Signalisierungsprozeduren ebenso möglich wie über manuelle Konfiguration via Netzmanagement. Die Aktivierung kann jederzeit erfolgen, also entweder während des Verbindungsaufbaus oder danach.

Wird ein Segment überwacht, ist es notwendig, zunächst die Grenzen des betreffenden Segmentes innerhalb der zugeordneten Verbindung LSP festzulegen. Dies erfolgt in der Regel dadurch, dass zunächst Quelle und Senke ermittelt werden. Im folgenden kann dann die MPLS-LAV-Funktion aktiviert werden. Sie muss aber inaktiv sein, wenn die Grenzen eines Segmentes verändert werden sollen oder das Segment gelöscht werden soll, was jederzeit möglich ist.

Der Vorteil der MPLS-LAV-Funktion liegt darin, überprüfen zu können, ob die verabredeten (Service Level Agreement) Quality of Service Parameter der betreffenden Verbindung LSP auch eingehalten worden sind. Hier ist insbesondere der Verfügbarkeitsstatus von Interesse, d.h. ob die Verbindung LSP verfügbar ist (LSP = "up" oder "available") oder nicht (LSP = "down" oder "unavailable"). Damit kann der Ausfall einer Verbindung LSP (Signal Fail Situations) festgestellt werden. In diesem Fall kann eine MPLS-Ersatzschaltung initiiert bzw. ein Alarm erzeugt werden, der gegebenenfalls an den Netzbetreiber weitergeleitet wird.

Der Verfügbarkeitsstatus der Verbindung LSP (LSP = "available", LSP = "unavailable") wird nun als Grundlage für weitere Informationen genommen. So ist der Verfügbarkeitsstatus ein Hinweis für das Auftreten des Ausfalls einer Verbindung (Signal Fail Situation). Im Falle der Nichtverfügbarkeit wird ein Signal 'Signal Fail" aktiviert. Im Falle der Verfügbarkeit der Verbindung wird diese Signal deakiviert. Mit Hilfe dieses Signales können dann Ersatzschalteanforderungen (MPLS Protection Switching) oder Alarme initiiert werden. Weiterhin kann im Rahmen von Diagnosemaßnahmen die Ortung des zugrundeliegenden Netzfehlers ermittelt werden.

Als Zusatzfunktion zur Überwachungsfunktion (MPLS-LAV-Funktion) kann eine weitere, rein passive Überwachungsfunktion (Non-intrusive Monitoring Funktion) vorgesehen sein. Hierbei werden die MPLS-OAM-LAV-Pakete beim Überwachungsvorgang nur gelesen aber nicht verändert (non-intrusive). Sie können an jedem der Connection Points CP entlang des MPLS-OAM-LAV-Verkehrsflusses auf end-to-end Basis oder Segment Basis ermittelt werden, indem der Inhalt der am Connection Point CP vorbeikommenden MPLS-OAM-LAV-Pakete verarbeitet wird, ohne daß charakteristische Größen wie z. B. der Inhalt der Pakete verändert wird. Die Überwachung erfolgt zusätzlich zur z.B. end-to-end Überwachung, d. h. in diesem Fall werden einzelne Verbindungsabschnitte der gesamten Verbindung überprüft. Hierbei umfasst die passive Überwachung dieselbe Funktionalität wie für die MPLS-LAV-Funktion beschrieben.

Der Vorteil der passiven Überwachungsfunktion ist in der Fehlerlokalisierung zu sehen. Hiermit kann ein schrittweise Verfahren implementiert werden, mit dem ermittelbar ist, welche Teile der Verbindung LSP unterbrochen sind. Die Verschlechterung der Übertragungsqualität (Signal Degrade) kann ebenso ermittelt werden.

Die MPLS-LAV-Funktion bildet ferner die Basis für die Überwachung der Übertragungsgüte (Performance Monitoring). Hierbei ist die Funktion, die die Überwachung der Übertragungsgüte vornimmt (im folgenden PM-Funktion genannt), als Teilfunktion zur MPLS-LAV-Funtion zu betrachten.

Die PM-Funktion wird verwendet, um die Übertragungsgüte einer Verbindung auf end-to-end-Basis oder Segmentbasis zu überwachen. Hierbei spielt die Anzahl der MPLS-LAV-Pakete, die pro Zeitintervall während der Übertragung verloren gehen eine e-bensogroße Rolle wie die Anzahl der Pakete, die fälschlicherweise eingefügt worden sind. Als Zeitintervall kann beispielhaft ein Zeitintervall von 1 Sekunde verwendet werden (Einsekundenintervall). Zu diesem Zweck enthält das MPLS-OAM-LAV-Paket ein spezielles Feld zur Aufnahme eines Paketzählers.

Die Überwachung der Übertragungsgüte wird nun durchgeführt, indem zunächst in der Quelle die Anzahl der gesendeten nutzdatentragenden MPLS-Pakete gewählt wird, die pro Sekunde für die betreffende Verbindung LSP übertragen werden. Der derart ermittelte Wert wird nun zur Senke übertragen, wo er mit dem Stand eines weiteren Zähler verglichen wird, in dem die Anzahl der nutzdatentragenden MPLS-Pakete, die in der Senke angekommen sind, festgehalten ist. Durch den Vergleich beider Werte kann die Anzahl der während der Übertragung verlorengegangenen Pakete oder der fehlerhaft eingefügten Pakete ermittelt werden.

Die Aktivierung der PM-Funktion kann nur bei aktiver (zugehöriger) MPLS-LAV-Funktion erfolgen. Ist dies für eine bestimmte Verbindung LSP der Fall, kann die PM-Funktion je nach Bedarf aktiv oder inaktiv sein. Aktivierung und Deaktivierung der PM-Funktion ist über Signalisierungsprozeduren ebenso möglich, wie alternativ über manuelle Konfiguration.

Die PM-Funktion wird verwendet, um zu ermitteln, ob die ausgehandelte (Service Level Agreement), garantierte Dienstgüte (Quality of Service, QoS) der zugeordneten Verbindung LSP auch eingehalten worden ist. Hierzu zählen z. B. die Anforderungen bezüglich Error Performance. Ferner kann ermittelt werden, ob der für die Verbindung garantierte Durchsatz in der Tat auch vom Netz eingehalten worden ist.

Die PM-Funktion kann auch verwendet werden um die Verschlechterung eines Signal (Signal Degrade) für eine Verbindung LSP festzustellen. In diesem Fall kann als Ergebnis ein MPLS-Protection-Switching initiiert werden. Alternativ hierzu kann auch ein Alarm generiert werden, der beispielsweise dem Netzbetreiber zugeführt wird. Als weiterer Anwendungsfall kann MPLS-Traffic-Engineering vorgesehen werden, um Überlastsituationen im Netz ermitteln zu können.

Wenn die PM-Funktion aktiv ist, zählt ein freilaufender Zähler in der Quelle die Anzahl der nutzdatentragenden MPLS-Pakete, die für die entsprechende Verbindung LSP gesendet werden. Hierbei wird unter nutzdatentragenden MPLS-Paketen alle die Pakete verstanden, die nicht als OAM-Pakete markiert sind. Der Zähler kann beispielhaft als 16 Bit Zähler ausgebildet sein (freilaufend, Modulo 65536). Jedes Mal, wenn ein MPLS-LAV-Paket in den MPLS-LAV-Verkehrsfluss der betreffenden Verbindung LSP (z.B. pro Sekunde) eingefügt wird, wird der aktuelle Wert des Zählers in das entsprechende Feld des MPLS-LAV-Paketes eingeschrieben. Dies bedeutet, dass sendeseitig (Quelle) die Differenz zwischen zwei aufeinanderfolgenden Zählerständen der Anzahl der nutzdatentragenden MPLS-Paketen entspricht,die zwischen zwei unmittelbar hintereinander gesendeten MPLS-OAM-LAV-Paketen übertragen worden sind.

Wenn die PM-Funktion aktiv ist, zählt in der Senke ein weiterer, freilaufender Zähler die Anzahl der eingetroffenen nutzdatentragenden MPLS-Pakete (für diese Verbindung LSP). Dieser Zähler ist ebenfalls als 16 Bit Zähler ausgebildet (freilaufend, Modulo 65536). Jedes Mal, wenn ein MPLS-OAM-LAV-Paket für die betreffende Verbindung LSP empfangen wird (z. B. pro Sekunde), werden in Echtzeitverarbeitung (d.h. innerhalb der Übertragungszeit eines nutzdatentragenden MPLS-Paketes) folgende Berechnungen durchgeführt:

Zunächst wird in einem ersten Berechnungsschritt die Differenz des aktuellen Zählerstandes (nach Ermittlung der Anzahl der eingetroffenen nutzdatentragenden MPLS-Pakete) und des Zählerstand gebildet, den dieser bei der Auswertung des letzten MPLS-OAM-LAV Paketes aufgewiesen hat. Das Ergebnis entspricht der Anzahl der nutzdatentragenden MPLS-Pakete, die innerhalb des Einsekundenintervalls für diese Verbindung LSP eingetroffen sind.

Im Folgenden wird dann in einem zweiten Berechnungsschritt der im MPLS-OAM-LAV-Paket mitübertragene Zählerstand gelesen, und vom Wert des mitübertragenen Zählerstandes des zuvor eingetroffenen MPLS-OAM-LAV-Paketes subtrahiert.Das Ergebnis entspricht der Anzahl der nutzdatentragenden MPLS-Pakete,die innerhalb des Einsekundenintervalls für diese Verbindung LSP in der Quelle gesendet worden sind.

Die Differenz zwischen den beiden Berechnungen entspricht der Anzahl der Pakete, die innerhalb des letzten Einsekundenintervalls für die betreffende Verbindung LSP verlorengegangen sind (unter der Annahme, dass mehr Pakete gesendet wurden als empfangen wurden). Dieses Resultat wird für dieses Zeitintervall gespeichert. Wenn mehr Pakete eingetroffen sind, als gesendet wurden, wird davon ausgegangen, dass Pakete irgendwo während der Übertragung in diese Verbindung LSP falsch eingefügt worden sind. Ein freilaufender Einsekundenzähler in der Senke bewerkstelligt dann das weitere Verarbeiten.

Wenn der Status der zugehörigen Verbindung LSP "down" oder "unavailable" ist, wird die Aktivierung der PM-Funktion solange unterdrückt, bis der Status dieser Verbindung wieder "up" oder "available" ist.

Wenn die bezüglich der PM-Funktion in einem MPLS-OAM-LAV-Paket enthaltenen Informationen verloren gehen, sollten keine größeren Probleme zu erwarten sein. Das als nächstes empfangene Paket mit Informationen bezüglich der PM-Funktion wird dann einfach ausgewertet, und das Ergebnis auf ein Zweisekundenintervall angewendet.

Mit einem 16 Bit Zähler - wie oben beschrieben - können Verbindungen mit einem Durchsatz von 10 Gbit/sec (entsprechend ungefähr 300 Mio. IP-Paketen pro Sekunde) und Paketverlustraten bis wenigsten 10⁻⁴ genau berechnet werden. Hierbei wird von IP-Paketen mit der geringst möglichen Größe ausgegangen. Für höhere Paketverlustraten können die Ergebnisse ungenauer werden, wobei es allerdings wahrscheinlich ist, dass unter diesen Umständen die Verbindung unterbrochen (Signal Fail) und als nicht verfügbar erklärt wird, womit die Performance-Monitoring Ergebnisse in jedem Fall ungültig sind.

Wenn sowohl der Verlust als auch das falsche Einfügen von Paketen unmittelbar hintereinander erfolgt, werden sich die Ergebnisse teilweise ausmitteln. Es kann aber hierbei davon ausgegangen werden, dass dies jedoch im Normalbetrieb keine gewöhnliche Situation darstellt.

Die Ergebnisse bezüglich Verlustraten oder fehlerhaftes Einfügen von Paketen pro Einsekundenintervall werden als Basis für weitere Berechnungen genommen:

So ist es mit diesen Informationen möglich, zu ermitteln, ob die Verschlechterung eines Signals (Signal Degrade Situation) aufgetreten ist. Ist dies der Fall, kann z.B. MPLS-Protection Switching initiiert werden. Weiterhin können die Ergebnisse für ein Einsekundenintervall zu einem 15 Minutenintervall akkumuliert werden. Damit können dann entsprechende Aussagen für ein 15 Minutenintervalle gemacht werden. Diese werden gespeichert und gegebenenfalls dem Netzmanagement zugeführt. Weitere Intervalle wie beispielsweise 24 Stundenintervalle sind ebenso möglich.

Ferner kann auch in beliebigen zwischen Quelle und Senke liegenden Netzeinrichtungen die Übertragungsgüte der Verbindung oder des Teilabschnitts der Verbindung überwacht werden. Mit der Information über die Übertragungsgüte der MPLS-Verbindung in beliebigen zwischen Quelle und Senke liegenden MPLS-Netzeinrichtungen ist es möglich, im Rahmen von Diagnosemaßnahmen den zugrundeliegenden Netzfehler zu orten.

## Patentansprüche

1. Verfahren zur verbindungsorientierten Übertragung von Paketen variabler Länge über, aus einer Mehrzahl von Verbindungsabschnitten gebildete Verbindungen (LSP), wobei ein Teil der Pakete mit einer Markierung (Flow Type) versehen ist,
**dadurch gekennzeichnet**
- **dass** ein Teil der markierten Pakete mit einer weiteren Kennung (OAM Type) beaufschlagt wird, und in diese Pakete an der Quelle sendeseitig (TLN1) ein Zählwert eingetragen wird, welcher der Anzahl der übertragenen Pakete innerhalb eines vorgegebenen Zeitintervalls entspricht,
- **dass** empfangsseitig (TLN2) dieser Zählwert ausgelesen und mit der Anzahl der tatsächlich empfangenen Pakete für diese Verbindung innerhalb des vorgegebenen Zeitintervalls verglichen wird, und dass das Ergebnis als Kriterium für verlorengegangene und/ oder fehlerhaft hinzugefügte Pakete fungiert.

2. Verfahren nach Anspruch 1, **dadurch gekennzeichnet, dass** die Pakete variabler Länge nach einem Multi Protocol Label Switching Übertragungsverfahren (MPLS) übertragen werden, wodurch diese Pakete als MPLS-Pakete, die markierten MPLS-Pakete als MPLS-OAM-Pakete, wobei die mit einer weiteren Kennung versehenen MPLS-OAM-Pakete in der Folge als MPLS-OAM-LAV-Pakete bezeichnet werden.

3. Verfahren nach Anspruch 2, **dadurch gekennzeichnet, dass** die MPLS-OAM-LAV-Pakete für die Überwachung der Verfügbarkeit des MPLS-Netzes eingesetzt werden, und als Segment MPLS-OAM-Verkehrsfluss ausgeprägt sind, indem diese innerhalb eines als OAM Segment bezeichneten Teilabschnitts der MPLS-Verbindung übertragen werden, und somit diesen Teilabschnitt der MPLS-Verbindung auf Verfügbarkeit überwachen können.

4. Verfahren nach einem der Ansprüche 1 bis 3, **dadurch gekennzeichnet, dass** für den Fall, dass die Anzahl der verlorengegangenen oder fälschlicherweise eingefügten MPLS-Pakete der Verbindung (LSP) oder des Teilabschnitts der MPLS-Verbindung einen voreingestellten Schwellwert überschreitet, ein entsprechender Alarm generiert wird, der ein Kriterium für die Beeinträchtigung der Übertragungsgüte der Verbindung (LSP) ist, und der an den Netzbetreiber und/ oder an ein MPLS-Ersatzschalteverfahren weitergeleitet wird.

5. Verfahren nach einem der Ansprüche 1 bis 4, **dadurch gekennzeichnet, dass** im Falle einer Beeinträchtigung der Übertragungsgüte der MPLS-Verbindung oder des Teilabschnitts der MPLS-Verbindung, diese Information an das Netzmanagement-System weitergeleitet wird, wo sie weiterverarbeitet und gespeichert wird, um dem Netzbetreiber Statistiken über die Übertragungsgüte der MPLS-Verbindung zur Verfügung zu stellen.

6. Verfahren nach einem der vorstehenden Ansprüche, **dadurch gekennzeichnet, dass** auch in beliebigen zwischen Quelle und Senke liegenden Netzeinrichtungen die Übertragungsgüte der Verbindung (LSP) oder des Teilabschnitts der Verbindung (LSP) überwacht wird.

7. Verfahren nach einem der vorstehenden Ansprüche, **dadurch gekennzeichnet, dass** das Verfahren zur Überwachung der Übertragungsgüte der Verbindung (LSP) an Quelle und Senke aktiviert und deaktiviert werden kann, indem benutzergesteuert über die Netzsignalisierung oder über das Netzmanagement geeignete Steuerabläufe angestoßen werden.

## Claims

1. Method for the connection-oriented transmission of packets of variable length via label switched paths (LSP) formed from a plurality of segments, wherein a part of the packets is provided with a marking (flow type),
**characterized in that**
- a part of the marked packets is provided with a further identifier (OAM type) and a count which corresponds to the number of transmitted packets within a predetermined time interval is entered into these packets at the source at the transmitting end (TLN1),
- that this count is read out at the receiving end (TLN2) and is compared with the number of packets actually received for this label switched path within the predetermined time interval, and that the result acts as criterion for lost and/or erroneously added packets.

2. Method according to Claim 1, **characterized in that** the packets of variable length are transmitted in accordance with a multi-protocol label switching transmission method (MPLS) as a result of which these packets are called MPLS packets, the marked MPLS packets are called MPLS OAM packets, wherein the MPLS OAM packets provided with a further identifier are subsequently called MPLS OAM LAV packets.

3. Method according to Claim 2, **characterized in that** the MPLS OAM LAV packets are used for monitoring the availability of the MPLS network and are marked as MPLS OAM traffic flow segment by being transmitted within a part-segment, called OAM segment, of the MPLS label switched path and can thus monitor this part-segment of the MPLS label switched path for availability.

4. Method according to one of Claims 1 to 3, **characterized in that**, in the case where the number of lost or erroneously inserted MPLS packets of the label switched path (LSP) or of the part-segment of the MPLS label switched path exceeds a preset threshold value, a corresponding alarm is generated which is a criterion of the degradation of the transmission performance of the label switched path (LSP) and which is forwarded to the network operator and/or to an MPLS protection switching process.

5. Method according to one of Claims 1 to 4, **characterized in that**, in the case of a degradation of the transmission performance of the MPLS label switched path or of the part-segment of the MPLS label switched path, this information is forwarded to the network management system where it is processed further and stored in order to provide the network operator with statistics about the transmission performance of the MPLS label switched path.

6. Method according to one of the preceding claims, **characterized in that** the transmission performance of the label switched path (LSP) or of the part-segment of the label switched path (LSP) is also monitored in any network equipment located between source and sink.

7. Method according to one of the preceding claims, **characterized in that** the method for monitoring the transmission performance of the label switched path (LSP) can be activated and deactivated at source and sink by initiating suitable control sequences under user control via the network signalling or via the network management.

## Revendications

1. Procédé pour la transmission orientée liaisons de paquets de longueur variable par l'intermédiaire de liaisons (LSP) formées à partir d'une pluralité de sections de liaisons, une partie des paquets étant munie d'un marquage (Flow Type),
**caractérisé en ce**
- **qu'**une partie des paquets marqués est dotée d'une identification supplémentaire (OAM Type), et en ce qu'une valeur de comptage est inscrite dans ces paquets à la source côté émission (TLN1), laquelle valeur de comptage correspond au nombre de paquets transmis dans un intervalle de temps prédéfini,
- en ce que du côté réception (TLN2), cette valeur de comptage est lue et comparée au nombre de paquets effectivement reçus pour cette liaison dans l'intervalle de temps prédéfini, et en ce que le résultat sert de critère pour des paquets perdus et/ou ajoutés de manière erronée.

2. Procédé selon la revendication 1, **caractérisé en ce que** les paquets de longueur variable sont transmis selon un procédé de transmission Multi Protocol Label Switching (MPLS), sur quoi ces paquets sont appelés paquets MPLS, les paquets MPLS marqués sont appelés paquets MPLS-OAM, les paquets MPLS-OAM munis d'une identification supplémentaire étant en conséquence appelés paquets MPLS-OAM-LAV.

3. Procédé selon la revendication 2, **caractérisé en ce que** les paquets MPLS-OAM-LAV sont utilisés pour la surveillance de la disponibilité du réseau MPLS et sont marqués comme segment de flux de trafic MPLS-OAM, du fait que ceux-ci sont transmis dans une section partielle, désignée de segment OAM, de la liaison MPLS, et qu'ils peuvent ainsi surveiller cette section partielle de la liaison MPLS quant à sa disponibilité.

4. Procédé selon l'une quelconque des revendications 1 à 3, **caractérisé en ce qu'**au cas où le nombre de paquets MPLS, perdus ou insérés de manière erronée, de la liaison (LSP) ou de la section partielle de la liaison MPLS dépasse une valeur seuil préréglée, une alarme correspondante est générée, qui est un critère pour l'altération de la qualité de transmission de la liaison (LSP), et qui est transférée à l'opérateur du réseau et/ou à un procédé de commutation équivalente MPLS.

5. Procédé selon l'une quelconque des revendications 1 à 4, **caractérisé en ce qu'**en cas d'une altération de la qualité de transmission de la liaison MPLS ou de la section partielle de la liaison MPLS, cette information est transférée au système de gestion du réseau, où elle est traitée et mémorisée afin de fournir à l'opérateur du réseau des statistiques sur la qualité de transmission de la liaison MPLS.

6. Procédé selon l'une quelconque des revendications précédentes, **caractérisé en ce que** dans des dispositifs de réseau quelconques situés entre la source et le puits, la qualité de transmission de la liaison (LSP) ou de la section partielle de la liaison (LSP) est également surveillée.

7. Procédé selon l'une quelconque des revendications précédentes, **caractérisé en ce que** le procédé pour la surveillance de la qualité de transmission de la liaison (LSP) peut être activé et désactivé à la source et au puits, du fait que des déroulements de commande appropriés peuvent être initiés en étant commandés par l'utilisateur, par l'intermédiaire de la signalisation de réseau ou par l'intermédiaire de la gestion du réseau.
